# EUROPEAN PATENT APPLICATION

(11) **EP 1 013 708 A2**
(43) Date of publication of application: **28.06.2000**
(21) Application number: 99830709.4
(22) Date of filing: 12.11.1999
(51) Int. Cl.: C08J 11/08, C08L 25/06

(54) **Method for recycling expanded polystyrene**

(30) Priority: 23.12.1998 IT CS980018
(71) Applicant: Federico, Demetrio, 87068 Rossano Scalo (CS) (IT)
(72) Inventor: Federico, Demetrio, 87068 Rossano Scalo (CS) (IT)

(57) **Abstract**

This invention has the ambition to have solved the serious problem: it pulls down the volume of wastes in the place of production by bringing it back to the originary volume; it recovers the expanded polystyrene, dissolved in solution with the technique of flotation; it makes it useful for the production of plastic manufactured goods as binder and other uses.

## Description

The section to whom the invention is referred, is that of Different Operations B, Class B-01/B-29 of Chimeca C, Class C-08 f, J and C-11 d.

The pre-existent technique implies the grinding of wastes into granules which can be used as light inert in concretes and mortars,or in the combustion with heat production. They are also used as "charge" in the production of the new EPS articles,but only a small part because of Its technological links.

The object of this industrial invention is a manufacturing process aimed at the recycling of wastes in EPS (expanded polystyrene sintered) by flotation of wastes dissolved in a solution by a solvent.

It's generally-known that EPS wastes,which is nowadays widely used for packings, supports, containers, ecc., are an ecological problem still unsolved, both because of their volume and their use subdivided in many sectors. Only when the collecting source is not wasted, the only type of reycling consists in reducing into granules the wastes in order to utilize them again as shock-proof components, insulating materials, and to lighten cement works.

All these are further utilizations whose costs are so heavy that any structure of collecting and recycling cannot be considered profitable. In fact the wastes of non expanded polystyrene, once they are grinded they are replaced in the die casting machine, so there is recycling with recovery of the raw material whose cost largely assimilate the costs for the grinding or the washing and transport of wastes recovered by the differentiation of R.S.U. or Specials. On the contrary, for the EPS wastes no king of economical recycling has ever been found and even if the differentiated collecting would be imposed, the initiative would be antieconomical because of the costs of transport and the incidence of their volume on the capacity of disposals.

The ecological problem of expanded polystyrene, is similar to the problem of cars' used tyres: industries must pay for the withdrawal; the disposals don't accept them willingly; the recycling doesn't cover the costs of collecting and of transport.

The essence of this invention consists in having found a new reycling process aimed at utilizing again the wastes of expanded polystyrene for the production of plastic manufactured goods in die casting, after having brought back them to their originary volume by a solvent and after having recovered it by flotation through a chemical agent, composed of a liquid glyceride and mixed to the 50% or in an equal percentage, with non expanded polystyrene in granules.

Considering that the obstacles to pull down are represented by the volume and by the costs of transport, the manufacturing process for this new kind of recycling of expanded polystyrene wastes takes place in two phases: the first, reduces their volume during the production dissolving them and recovering the polystyrene no more expanded, by chemical solution; the second one rectifies the solution, mixing it with granules of non expanded polystyrene for the production of plastic manufactured goods in die casting: in the first phase there is the supplying and the withdrawal of special containers, but it can be automatized with a special machine applied to a motor vehicle.

The solution is recovered in a pasty mass, and can be employed again for the production of manufactured goods through moulds immersed in boiling water, or used as a binder of non expanded polystyrene.

### 1st Phase of the manufacturing process:

In a special container, we introduce a liquid glyceride and a solvent, so that the solution covers a third of the container capacity.

So, we add a lot of water, (which for the chemical component of the elements doesn't become solution), so that we cover the 50% of the container.

The solution solvent-glyceride, will have have a specific weight higher than that of water, in order to be underlying to it.

Once we have introduced the wastes of expanded polystyrene in the container, we stress them manually or by the lid of the container, or by some others mechanisms of thrust, so that after having passed through the water layer, they touch the solution solvent-glyceride.

The solvent attacks the expanded polytyrene dissolving it and at the same time, the liquid glyceride recovers it forming a pasty mass, which can't be no more attacked by the solvent. In fact, the glyceride acts like a floating agent in order to separate and drag on the surface of the solution the dissolved expanded polystyrene.

The pasty mass is proportional to the percentages of the solution elements and to the amount of polystyrene wastes we have introduced in the container.

We obtain the same result by dissolving first the wastes of expanded polystyrene with the solvent and then, introducing the glyceride agent to effect the flotation. But in this way, the container walls get muddy with fringes and filaments of the polystyrene recovered, so that we should do a constant cleaning of maintenance. This incovenience can be avoided with the first way of acting.

### 2nd Phase of the manufacturing process:

The pasty mass, taken out of the container, is liberated by the glyceride, through washing, pressing or boiling in water, depending on the way we want to transform it: in manufactured goods with the die casting machine or in manufactured goods with boiling in water with special moulds

But with the die casting machine, the pasty mass has to be reiforced to the 50% or similar percentage, with pure polystyrene in granules, because, having lost the primary molecular adhesion introducing only the pasty mass, we would produce only poor quality manufactured goods with little resistance.

### Effects of the manufacturing process of 1st and 2nd Phase:

**a)** reducing the expanded polystyrene volume by bringing back it to its originary volume. So reduction of collecting and transport costs;
**b)** utilizing again the by-product for the production of plastic manufactured goods. So, such an added value that the whole structure of collecting and treatment is justified; **c)** evident contribution to the ecological safeguard of the environment

Another important ecological benefit is that the glyceride, necessary to the floating action, could be formed by the liquid wastes fat of various activities, controled by regulations which forbid the dispersion in the environment.

The result is that except for the solvent, the other elements of the manufacturing process of this invention become elements economically active.

Moreover, the new type of manufacturing process, can also interest the non expanded polystyrene and materials of the same class, even if for different aims. Anyway it can be used in all the cases in which is possible to apply the separation of a plastic material in solution with its solvent, by flotation through a glyceride agent.

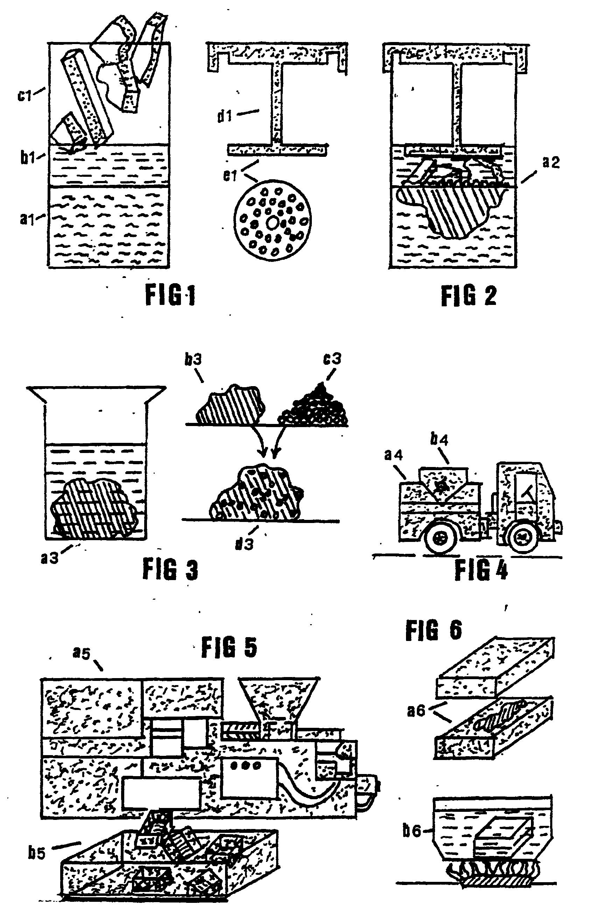

A possible structure in conformity with the invention, is reported like example on the enclosed drawing plate in which:
**Figure n.1** (1/1, Fig.1), shows the type of container, to supply and whithdraw by the co-owners communities, firms, societies, corporations, etc., where **a1**, indicates the level of the solvent solution glyceride liquid; **b1**, the water level; **c1**, the wastes of expanded polystyrene; **d1**, the particular lid of the container, used to push by the disc-like appendix, indicated by **e1**, the wastes in the solution;
**Figure n.2** (1/1, Fig.2), shows the container with the lid, in which the wastes are transforming in pasty mass, indicated by **a2**;
**Figure n.3** (1/1, Fig. 3), shows by **a3**, the washing of the pasty mass and by **b3**, **c3**, **d3**, the mixing of the pasty mass with granules of non expanded polystyrene;
**Figure n.4** (1/1, Fig.4), shows by **a4**, the motor vehicle and by **b4**, the container with incorporated mechanism for the thrust of the wastes. The motor vehicle so composed is aimed at automatizing the 1st phase of the manufacturing process, substituting the supplying and the withdrawal of the containers by different places;
**Figure n.5** (1/1, Fig.5), shows by **a5** the die casting machine and by **b5**, the production of plastic manufactured goods;
**Figure n.6** (1/1, Fig.6), shows by **a6**, a mould and by **b6**, the boiling of the mould itself for the production of specials and handicraft manufactured goods.

Naturally in practice, the container and its lid, to supply and withdraw, or applied to a collecting motor vehicle, can have constructive modifications such as in measures and form, which don't modify the invention and can be adapted to the different necessities.

The same thing is for the other components used for washing and rectifying the pasty mass, for mixing and for others at the moment unspecified.

## Claims

1. Manufacturing process for the recycling of expanded polystyrene wastes, characterized by the fact that, in contact with a solution composed of a solvent and a liquid glyceride, polystyrene is reduced to its originary volume and at the same time is divided by the solvent by flotation caused by the glyceride agent;

2. Process, in accordance with claim 1), characterized by the fact that, the solution can be composed of the solvent and the polystyrene dissolved in it and the flotation happens subsequently by the introduction of the floating agent constituted by the glyceride;

3. Process, in accordance with claims 1) and 2), characterized by the fact that the wastes of expanded polystyrene, separated by flotation by the solvent and brought to its originary non expanded volume, form a unique plastic mass;

4. Process, in accordance with claims going from 1) to 3), characterized by the fact that the plastic mass, after having been washed, pressed, reduced in granukes mixed in a right percentage with granules of pure non expanded polystyrene, is introduced in the die casting machine for the production of plastic manufacturing goods;

5. Process, in accordance with claims going from 1) to 3), characterized by fact that , the plastic mass, can be moulded by moulds immersed in boiling water or it can constitute, conveniently diluted, a binder;

6. Process, in accordance with claims going from 1) to 3), characterized by the fact that, the structure of the process, consists of a container with lid which brings the expanded polystyrene wastes in contact with the solvent or the solution solvent glyceride, if they aren't brought in contact manually;

7. Process, in accordance with claims going from 1) to 6), characterized by the fact that, the container can be applied, with the necessary modifications, on a special motor vehicle for the collecting of wastes from different places, avoiding the supplying and the withdrawal of the container at every place;

8. Process, in accordance with claims 1) and 2), characterized by the fact that, the solvent or solution solvent-glyceride, have a specific weight above that of water, that is also introduced in the container to avoid the solvent evaporation and the adhesion of the solution to the container walls;

9. Process in accordance with claims 1) and 2), characterized by the fact that, it can be used also for non expanded polystyrene and for other similar aims and uses;

10. Process, in accordance with claims going from 1) to 9), characterized by the fact that, the different measures and forms of the structure, percentages and types of liquids and materials, which will adapt to the various needs and sectors, will not damage the validity of this invention aimed at the ecological safeguard of the environment..
